# EUROPÄISCHE PATENTSCHRIFT

(11) **EP 2 880 487 B1**
(45) Veröffentlichungstag und Bekanntmachung des Hinweises auf die Patenterteilung: **18.09.2019**
(21) Anmeldenummer: 13747813.7
(22) Anmeldetag: 31.07.2013
(51) Int. Cl.: G02B 27/01, G02B 27/10, F21V 8/00

(54) **ANZEIGEVORRICHTUNG**
DISPLAY DEVICE
DISPOSITIF D'AFFICHAGE

(30) Priorität: 02.08.2012 DE 102012213685
(43) Veröffentlichungstag der Anmeldung: 10.06.2015
(73) Patentinhaber: tooz technologies GmbH, 73430 Aalen (DE)
(72) Erfinder: DOBSCHAL, Hans-Jürgen, 99510 Kleinromstedt (DE); LINDIG, Karsten, 99084 Erfurt (DE)
(74) Vertreter: Patentanwälte Geyer, Fehners & Partner mbB
(86) Internationale Anmeldenummer: PCT/EP2013/066103
(87) Internationale Veröffentlichungsnummer: WO 2014/020073

(56) Entgegenhaltungen:
- WO-A1-2011/089433
- WO-A1-2012/062681
- DE-A1-102010 041 348
- US-A- 4 711 512
- US-A1- 2010 177 388

## Beschreibung

Die vorliegende Erfindung betrifft eine Anzeigevorrichtung mit den Merkmalen des Oberbegriffes des Anspruches 1.

Eine solche Anzeigevorrichtung ist z.B. aus der WO 2012/062681 A1 bekannt. Weitere Anzeigevorrichtungen sind z.B. aus der DE 10 2010 041 348 A1 oder der WO 2008/023375 A1 bekannt. Eine weitere Anzeigevorrichtung ist aus der US 2010/0220295 A1 bekannt, wobei das Lichtführungselement als planparallele Platte ausgebildet ist, so daß sowohl die Vorderseite als auch die Rückseite jeweils eine plane Fläche ist. In diesem Fall ist es relativ einfach, eine große Eyebox (der Bereich der Abbildungsoptik, in dem sich das Auge des Benutzers bewegen kann, wobei der Benutzer stets noch das ausgekoppelte Bild wahrnehmen kann) zu generieren. Dies wird dadurch erreicht, daß eine sequentielle Mehrfachauskopplung über das Auskoppelgitter, das nicht abbildend ist, durchgeführt wird.

Wenn das Lichtführungselement jedoch eine gekrümmte Vorderseite und/oder eine gekrümmte Rückseite aufweist tritt die Schwierigkeit auf, daß die zwischen den beiden Gittern in Totalreflexion geführten Lichtbündel von der gekrümmten Vorderseite und/oder der gekrümmten Rückseite beeinflußt werden, so daß nach jeder Reflexion ein anderer Zustand der sich aufgrund der Lichtbündel ausbreitenden Welle vorhanden ist.

Ausgehend hiervon ist es daher Aufgabe der Erfindung, die Anzeigevorrichtung der eingangs genannten Art so weiterzubilden, daß bei einem Lichtführungselement mit einer gekrümmten Vorderseite und/oder einer gekrümmten Rückseite eine große Eyebox der Abbildungsoptik mit gleichzeitig ausreichend großem Sichtfeld realisiert werden kann.

Erfindungsgemäß wird die Aufgabe bei einer Anzeigevorrichtung der eingangs genannten Art dadurch gelöst, daß die Abbildungsoptik so ausgelegt ist, daß die Lichtbündel in Abhängigkeit der Position des zugehörigen Pixels maximal n mal auf das Auskoppelgitter treffen, wobei n eine ganze Zahl größer oder gleich 3 ist, und daß die Lichtbündel in Abhängigkeit der Position des zugehörigen Pixels bei genau 1 bis m aufeinanderfolgenden Auftreffen auf das Auskoppelgitter ausgekoppelt werden, wobei m eine ganze Zahl größer oder gleich 1 und kleiner als n ist und die Auskopplung spätestens beim (n-m+1)-ten Auftreffen beginnt.

Durch diese Auskopplung der Lichtbündel in Abhängigkeit der Position des zugehörigen Pixels kann das Auskoppelgitter so an die auftreffenden Lichtbündel angepaßt werden, daß die gewünschte Eyebox bei gleichzeitig vorgegebenem Sichtfeld realisiert werden kann. Da die Lichtbündel jeweils an unterschiedlichen Orten bei ihrem aufeinanderfolgenden Auftreffen auf das Auskoppelgitter treffen, ist die dazu notwendige entsprechende Anpassung des Auskoppelgitters leicht möglich.

Wenn nur die Vorderseite oder nur die Rückseite gekrümmt ausgebildet ist, ist die andere der beiden Seiten plan. Bevorzugt sind sowohl Vorderseite als auch Rückseite gekrümmt ausgebildet.

Insbesondere können bzw. kann das Einkoppel- und/oder Auskoppelgitter als abbildendes Gitter ausgebildet sein. Damit ist es ferner möglich, Abbildungsfehler zu kompensieren, die insbesondere deshalb auftreten, da die Lichtbündel unter einem sehr flachen Winkel (aufgrund der Führung durch Totalreflexion in dem Lichtführungselement) auf das Auskoppelgitter treffen. Dabei handelt es sich insbesondere um Astigmatismus und Koma.

Das Einkoppel- und/oder Auskoppelgitter kann als reflektives Gitter, insbesondere als reflektives Volumengitter oder reflektives Hologramm, ausgebildet sein.

Insbesondere können bzw. kann das Einkoppel- und/oder Auskoppelgitter auf der Vorderseite des Lichtführungselementes ausgebildet sein. Die Vorderseite ist dabei die Seite, die beim bestimmungsgemäßen Gebrauch vom Auge des Benutzers weg weist.

Ferner kann das Auskoppelgitter so ausgelegt sein, daß seine Beugungseffizienz für ein Lichtbündel von der ersten bis zur m-ten Auskopplung hin ansteigt. Damit ist es möglich, eine möglichst homogene Intensität im für den Betrachter wahrnehmbaren Bild zu erreichen.

Des weiteren kann zwischen dem Lichtführungselement und dem Bildgeber ein Verlaufsfilter angeordnet sein. Zusätzlich oder alternativ kann der Bildgeber eine ortsabhängige Variation der abgestrahlten Lichtintensität aufweisen. Damit kann wiederum eine möglichst homogene Intensität im für den Benutzer wahrnehmbaren Bild erreicht werden.

Insbesondere können sich mehrere Auskopplungen eines Lichtbündels in einer Eyebox der Abbildungsoptik teilweise überlappen.

Des weiteren kann das Einkoppel- und Auskoppelgitter jeweils eine Überlagerung von mehreren Einzelgittern sein, die auf unterschiedliche Mittenfrequenzen ausgelegt sind, wobei die Mittenfrequenz der Einzelgitter für das Ein- und Auskoppelgitter jeweils paarweise zusammenfallen. Damit ist auch eine ausgezeichnete Abbildung von weißem Licht möglich.

Die Anzeigevorrichtung kann ferner eine auf den Kopf des Benutzers aufsetzbare Haltevorrichtung aufweisen, an der der Bildgeber und das Lichtführungselement befestigt sind. Die Haltevorrichtung kann insbesondere brillenartig ausgebildet sein.

Das Lichtführungselement kann aus Glas oder Kunststoff hergestellt und/oder als Brillenglas ausgebildet sein.

Insbesondere können das Lichtführungselement und das Auskoppelgitter so ausgebildet sein, daß der Benutzer das erzeugte Bild in Überlagerung mit der Umgebung wahrnehmen kann.

Die erfindungsgemäße Anzeigevorrichtung kann auch als Beamexpander auf einem gekrümmten Lichtführungselement bezeichnet werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Draufsicht eines Teils der Anzeigevorrichtung gemäß Fig. 1;
- Fig. 3a-3e: Detailansichten gemäß Fig. 2 zu unterschiedlichen Auskopplungen eines ersten Lichtbündels L1;
- Fig. 4: eine Draufsicht der ausgekoppelten Teillichtbündel gemäß Fig. 3a-3e in der Ebene der Augenpupille;
- Fig. 5a-5e: Detailansichten gemäß Fig. 2 zu unterschiedlichen Auskopplungen eines zweiten Lichtbündels L2;
- Fig. 6: eine Draufsicht der ausgekoppelten Teillichtbündel gemäß Fig. 5a-5e in der Ebene der Augenpupille;
- Fig. 7a-7e: Detailansichten gemäß Fig. 3a-3e zu unterschiedlichen Auskopplungen eines dritten Lichtbündels L3, und
- Fig. 8: eine Draufsicht der ausgekoppelten Teillichtbündel gemäß Fig. 7a-7e in der Ebene der Augenpupille.

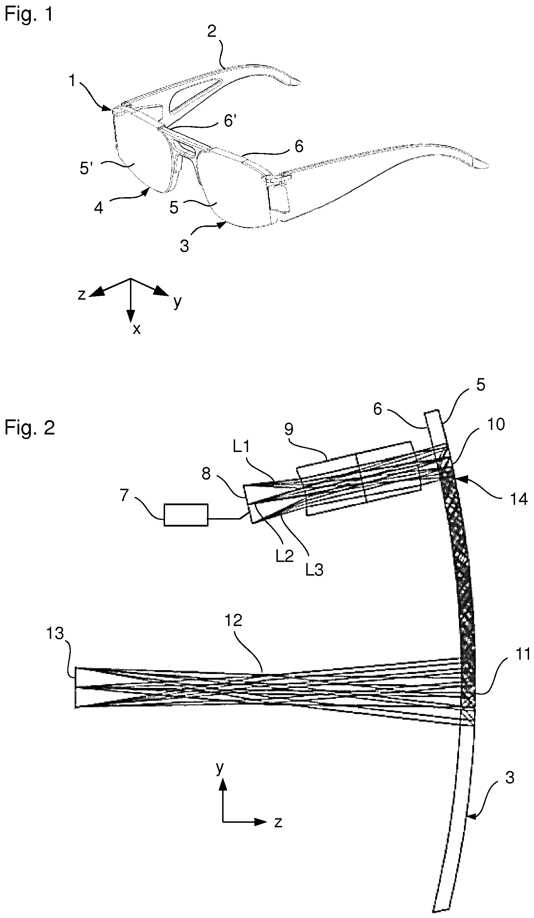

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Lichtführungselement 3, 4 in Form eines ersten und zweiten Brillenglases, die an der Haltevorrichtung 2 befestigt sind.

Die beiden Brillengläser 3, 4 weisen jeweils eine gekrümmte Vorderseite 5, 5' und eine gekrümmte Rückseite 6, 6' auf.

In Fig. 2 ist in einer schematischen Draufsicht das erste Brillenglas 3 in Verbindung mit weiteren Teilen der erfindungsgemäßen Anzeigevorrichtung 1 gezeigt. Das Brillenglas weist eine Dicke von 1,5 mm auf, wobei der Krümmungsradius von Vorder- und Rückseite 5, 6 jeweils 100 mm beträgt. Als Material für das Brillenglas 3 wird PMMA (Zeomex) verwendet. Die Anzeigevorrichtung 1 umfaßt ferner eine Steuereinheit 7, einen Bildgeber 8 (der hier beispielsweise als OLED-Modul ausgebildet ist) sowie eine zwischen dem Bildgeber 8 und dem ersten Brillenglas 3 angeordnete Zusatzoptik 9. Die Zusatzoptik 9 ist optional vorgesehen.

Auf der Vorderseite 5 des ersten Brillenglases 3 sind voneinander beabstandet ein Einkoppelgitter 10 und ein Auskoppelgitter 11 jeweils als reflektives Hologramm ausgebildet, deren Funktion nachfolgend noch im Detail erläutert wird. Ferner ist in Fig. 2 schematisch die Pupille 12 und die Netzhaut 13 eines Auges eines die erfindungsgemäße Anzeigevorrichtung 1 tragenden Benutzers eingezeichnet. Des weiteren ist schematisch der Strahlengang von drei Lichtbündeln L1, L2 und L3 vom Bildgeber 1 bis zur Netzhaut 13 eingezeichnet.

Die vom Bildgeber 8 abgegebenen Lichtbündel L1-L3 (jedes Lichtbündel L1-L3 geht von einem von mehreren Pixeln des Bildgebers 8 aus) werden von der Zusatzoptik 9 auf die Rückseite 6 des ersten Brillenglases 3 gerichtet, treten über die Rückseite 6 in das Brillenglas 3 ein und treffen auf das Einkoppelgitter 10. An dem Einkoppelgitter 10 werden die Strahlen so reflektiert und gebeugt, daß sie auf die Rückseite 6 unter einem solchen Winkel treffen, bei dem innere Totalreflexion auftritt. Damit werden die Lichtbündel L1-L3 mittels innerer Totalreflexion an der Rück- und Vorderseite 6, 5 bis zum Auskoppelgitter 11 geführt, das dann eine Auskopplung der Lichtbündel L1-L3 über die Rückseite 6 so bewirkt, daß ein Benutzer ein von dem Bildgeber 8 erzeugtes Bild als virtuelles Bild wahrnehmen kann. Die Zusatzoptik 9 in Verbindung mit dem ersten Brillenglas 3 und dem Einkoppel- sowie Auskoppelgitter 10, 11 bilden somit eine Abbildungsoptik 14, die das mittels dem Bildgeber 8 erzeugte Bild als virtuelles Bild für den Benutzer abbildet. Damit der Benutzer dieses virtuelle Bild wahrnehmen kann, muß die Pupille 12 des Auges des Benutzers in der Austrittspupille der Ausbildungsoptik 14 liegen. Da beispielsweise der Augenabstand von Betrachter zu Betrachter variiert, ist es von Vorteil, wenn die Austrittspupille der Abbildungsoptik 14 in der y-Richtung größer ist als die Augenpupille 12. In diesem Fall kann die erfindungsgemäße Anzeigevorrichtung 1 von unterschiedlichen Benutzern mit unterschiedlichen Augenabständen verwendet werden.

Damit die Austrittspupille der Abbildungsoptik 14 in der y-Richtung bzw. die Eyebox der Abbildungsoptik 14 (der Bereich, in dem sich das Auge des Benutzers bewegen und der Benutzer stets das ausgekoppelte Bild wahrnehmen kann) in der y-Richtung größer ist als die Augenpupille und gleichzeitig ein großes Sichtfeld in der y-Richtung vorliegt, ist das Auskoppelgitter 11 so ausgebildet, daß es von den Lichtbündeln L1-L3 in Abhängigkeit der Position des entsprechenden Pixels des Bildgebers 8 beim ersten Auftreffen auf das Auskoppelgitter 11 nur einen Teil ausgekoppelt. Die Auskopplung erfolgt über die erste Beugungsordnung des Auskoppelgitters 11. Der restliche Teil wird vom Auskoppelgitter 11 so zur Rückseite 6 des ersten Brillenglases 3 reflektiert (nullte Beugungsordnung), daß die entsprechenden Lichtbündel L1-L3 und/oder ein Teil der entsprechenden Lichtbündel L1-L3 nach einer inneren Totalreflexion an der Rückseite 6 erneut auf das Auskoppelgitter 11 in einem Bereich, der in y-Richtung von dem Bereich des ersten Auftreffens beabstandet ist, treffen. Von diesen Lichtbündeln L1-L3 bzw. Lichtbündelteilen wird wiederum nur ein Teil ausgekoppelt (erste Beugungsordnung). Der restliche Teil wird wiederum so zur Rückseite 6 hin reflektiert (nullte Beugungsordnung), daß nach einer inneren Totalreflexion an der Rückseite 6 die Lichtstrahlen der Lichtbündel L1-L3 bzw. der Lichtbündelteile wiederum auf das Auskoppelgitter 11 treffen. Das Auskoppelgitter 11 ist hier so ausgelegt, daß es maximal fünf Auskopplungen durchführt. Mit jeder Auskopplung wird somit ein Teillichtbündel erzeugt, die in y-Richtung zueinander versetzt sind. Das Auskoppelgitter 11 ist hier so ausgelegt, daß sich die benachbarten Teillichtbündel eines Lichtbündels L1-L3 in der Ebene der Austrittspupille jeweils teilweise überlappen.

Bei der hier beschriebenen Ausführungsform weist das dem Benutzer bereitgestellte Sichtfeld eine Größe von 12° x 4° mit einem Durchmesser der Eyebox von 7 mm auf, wobei für die Augenpupille ein Durchmesser von 3 mm angenommen wird.

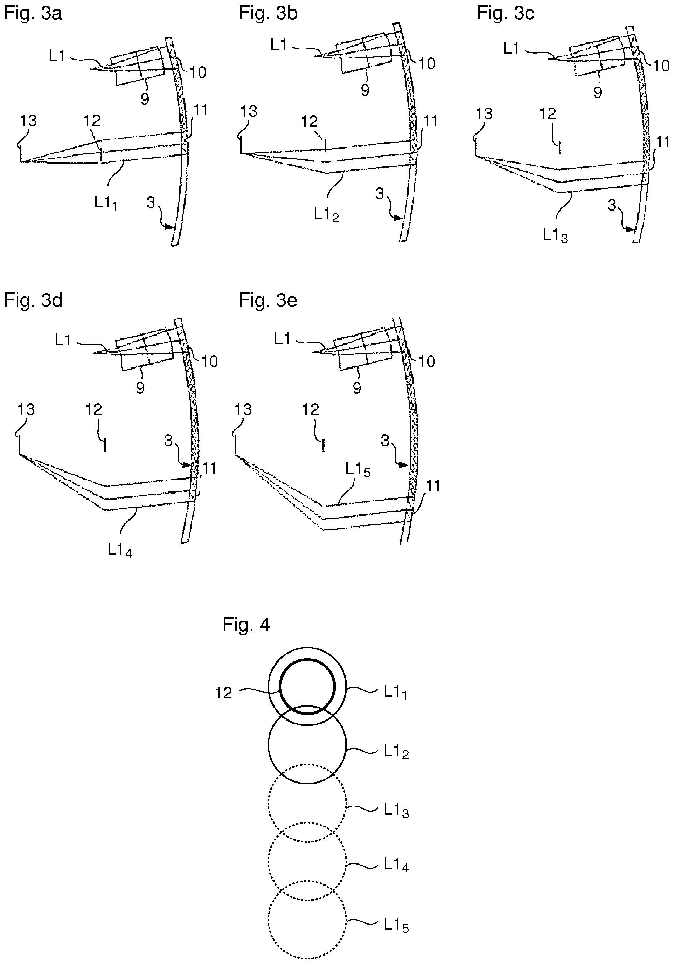

In Fig. 3a-3e sind die einzelnen Auskopplungen für den oberen Feldwinkel von +6° des bereitgestellten Sichtfeldes schematisch dargestellt. Der obere Feldwinkel entspricht auf dem Bildgeber 8 einem y-Wert von 2mm bezogen auf die Mitte des Bildgebers 8. In Fig. 3a ist die beim ersten Auftreffen des Lichtbündels L1 auf das Auskoppelgitter 11 bewirkte erste Auskopplung und somit das erste Teillichtbündel L1₁ gezeigt. In Fig. 3b-3e sind dann die beim zweiten bis fünften Auftreffen bewirkte zweite bis fünfte Auskopplung und somit das zweite bis fünfte Teillichtbündel L1₂, L1₃, L1₄ und L1₅ gezeigt.

Wie den Darstellungen in Fig. 3a-3e zu entnehmen ist, stammt der Hauptteil des für den Benutzer wahrnehmbaren Lichtes von der ersten Auskopplung (Teillichtbündel L1₁). Ein kleiner Teil stammt von der zweiten Auskopplung (Teillichtbündel L1₂). Das Licht der dritten bis fünften Auskopplung würde der Benutzer nicht mehr wahrnehmen. Daher ist das Auskoppelgitter 11 so ausgelegt, daß das Lichtbündel möglichst vollständig über die erste und zweite Auskopplung ausgekoppelt wird. Da die dritte bis fünfte Auskopplung die Augenpupille 12 nicht treffen würde, wird hierfür das Auskoppelgitter nicht ausgelegt. Die entsprechenden Teillichtbündel L1₃-L1₅ werden bei der üblichen Optimierungsrechnung zur Ermittlung der notwendigen Gitterparameter z.B. nicht berücksichtigt.

In Fig. 4 sind die Teillichtbündel L1₁L1₅ für die fünf Auskopplungen in der Ebene der Augenpupille 12 dargestellt, wobei die tatsächlich nicht erzeugten und nur zur Verdeutlichung der Erfindung beschriebenen Teillichtbündel L1₃-L1₅ gestrichelt eingezeichnet sind.

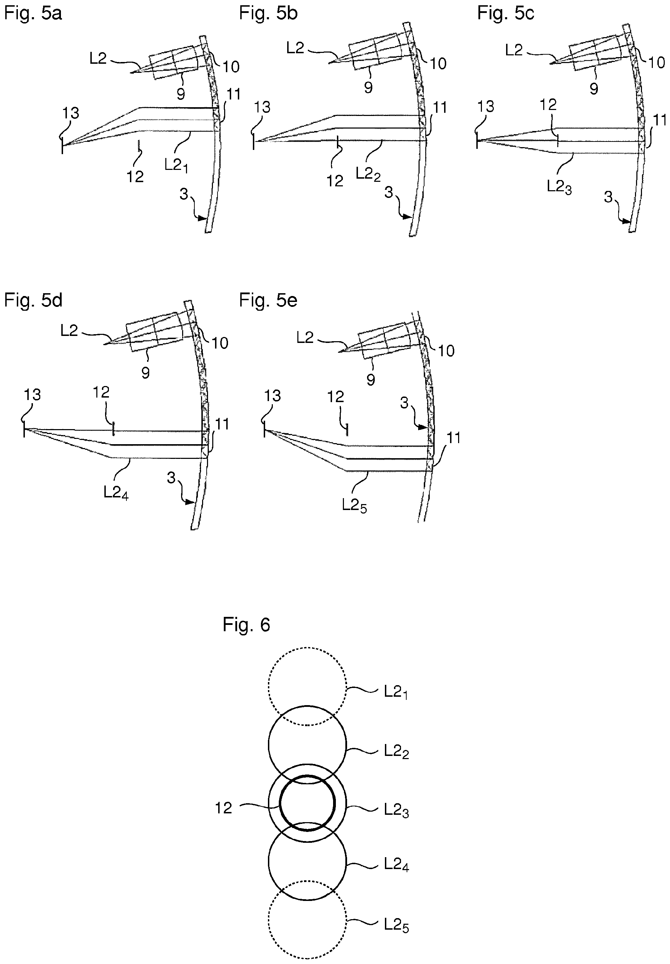

In Fig. 5a-5e sind die fünf Auskopplungen in gleicher Weise wie in Fig. 3a-3e für einen mittleren Feldwinkel dargestellt, bei dem der Einfallswinkel auf die Augenpupille 12 senkrecht ist, was einem y-Wert auf dem Bildgeber von 0 mm und somit der Mitte des Bildgebers 8 entspricht. In Fig. 6 ist in gleicher Weise wie in Fig. 4 die Position der Augenpupille 12 bezogen auf die fünf Teillichtbündel L2₁, L2₂, L2₃, L2₄, L2₅ dargestellt. Aus den Darstellungen gemäß Fig. 5a-5e und Fig. 6 ist ersichtlich, daß die dritte Auskopplung L2₃ für den Betrachter das meiste Licht liefert. Die zweite und vierte Auskopplung L2₂ und L2₄ tragen nur mit einem geringen Teil bei. Daher ist das Auskoppelgitter 11 so ausgelegt, daß die Auskopplung des zweiten Lichtbündels L2 beim zweiten bis vierten Auftreffen auf das Auskoppelgitter 11 erfolgt.

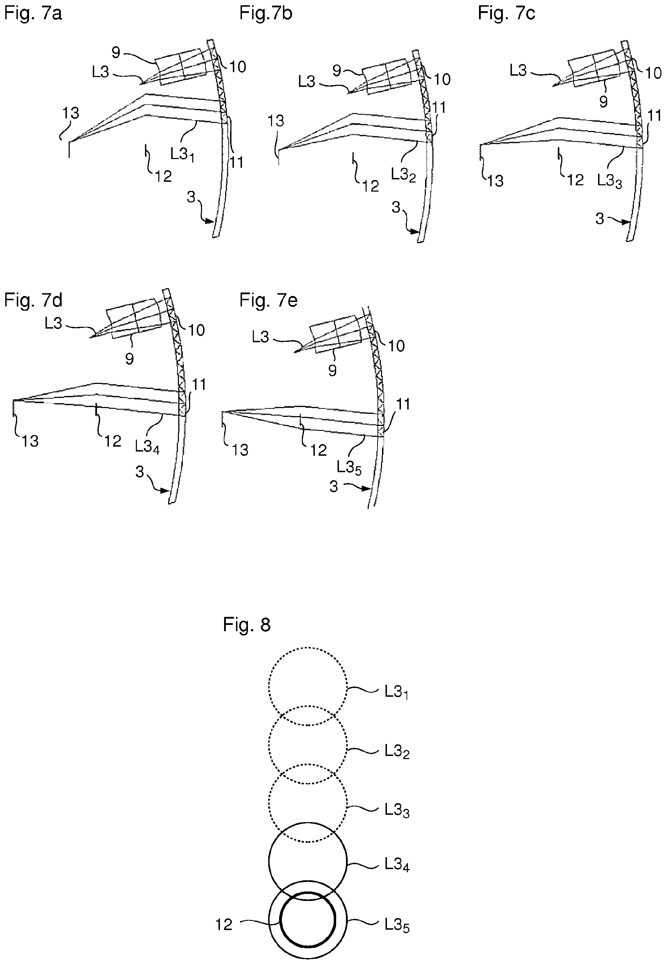

In Fig. 7a-7e ist in gleicher Weise wie in Fig. 3a-3e die Auskopplung für einen unteren Feldwinkel von - 6° auf die Augenpupille 12 gezeigt, was einem y-Wert von -2 mm von der Mitte auf den Bildgeber 8 entspricht. In Fig. 8 ist wiederum die Position der Augenpupille 12 bezogen auf die ausgekoppelten Teillichtbündel L3₁, L3₂, L3₃, L3₄, L3₅ in Draufsicht gemäß Fig. 4 gezeigt. Aus den Fig. 7a-7e und 8 ist ersichtlich, daß der Hauptteil des Lichtes aus der fünften Auskopplung L3₅ stammt. Zum geringen Teil trägt noch die vierte Auskopplung L3₄ bei. Daher ist das Auskoppelgitter 11 so ausgelegt, daß die Auskopplung des dritten Lichtbündels L3 beim vierten und fünften Auftreffen erfolgt.

Das Auskoppelgitter 11 weist bevorzugt für jede Auskopplung die optimale Gitterstruktur auf, wobei die Gitterstruktur bevorzugt so ausgelegt ist, daß für Feldwinkel, die von mehreren benachbarten Auskopplungen bedient werden, Deckungsgleichheit erreicht wird. Hierunter wird verstanden, daß im Rahmen der Augenauflösung (< 1 min) der gleiche Ort auf der Netzhaut 13 getroffen wird. Man kann auch sagen, daß für diese benachbarten Auskopplungen für einen Feldwinkel der gleiche Hauptstrahlwinkel vorliegt. Dies kann z.B. dadurch erreicht werden, daß sowohl das Einkoppelgitter 10 als auch das Auskoppelgitter 11 abbildend ausgelegt und simultan in Verbindung mit der konkreten Form des ersten Brillenglases 3 so optimiert werden, daß einerseits die Forderungen der Modulationsübertragungsfunktion erfüllt werden und andererseits die beschriebene Deckungsgleichheit erreicht wird. In der Regel wird ein Feldwinkel von maximal drei benachbarten Auskopplungen bedient, so daß die Deckungsgleichheit somit für maximal drei benachbarte Auskopplungen erreicht werden sollte, was sich in der Praxis gut realisieren läßt.

Wenn man das Einkoppel- und Auskoppelgitter 10 und 11 abbildend auslegt, können Abbildungsfehler, die durch den schrägen Einfall der Lichtbündel L1-L3 auf das Auskoppelgitter 11 bedingt sind, wie z.B. Astigmatismus und Koma, kompensiert werden. Der schräge Einfall auf das Auskoppelgitter 11 liegt unvermeidlich vor, da die Lichtbündel L1-L3 zum Auskoppelgitter 11 durch innere Totalreflexion an der Vorder- und Rückseite 5, 6 des ersten Brillenglases geführt wird.

Die Zusatzoptik 9 ist so ausgelegt, daß die Lichtbündel L1-L3 des Bildgebers als kollimierte Lichtbündel auf das Brillenglas 3 treffen. Die Zusatzoptik 9 kann jedoch auch weggelassen werden. In diesem Fall kann z.B. das Einkoppelgitter 10 diese Kollimationsfunktion übernehmen.

Bevorzugt ist die Eintrittspupille der Abbildungsoptik 14 auf oder in die Nähe des Einkoppelgitters 10 gelegt, um eine möglichst geringe Ausdehnung des Lichtfleckes der Lichtbündel bzw. Lichtstrahlbündel L1-L3 aller Pixel des Bildgebers 8 auf dem Einkoppelgitter 10 zu erreichen.

Ferner weisen die beiden Gitter 10, 11 bevorzugt annährend die gleiche Mittenfrequenz auf, um die spektrale Abhängigkeit zu minimieren. Des weiteren können die beiden Gitter 10, 11 eine annährend gleich große Grunddispersion aufweisen, wodurch einerseits erreicht wird, daß das Licht wieder in Richtung des Auges aus dem Brillenglas 3 herausgebeugt wird. Andererseits wird erreicht, daß sich die farbabhängigen Beugungswinkel annähernd kompensieren. Dadurch breiten sich alle Farben nach Verlassen des Brillenglases 3 jeweils möglichst in die gleiche Richtung aus, so daß eine merkliche Farbaufspreizung verhindert werden kann. Zur Erreichung der Deckungsgleichheit kann die Ablage der einzelnen benachbarten Auskopplungen des jeweiligen Lichtbündels L1-L3 zum geforderten Ziel-Bildort als Bewertungsgröße in die Meritfunktion der normalen Optimierung eingefügt werden, d.h. für jeden Ziel-Bildort werden die verschiedenen möglichen Auskoppelzweige, auf denen Licht zum Ziel-Bildort kommen kann, bezüglich Bildgüte (Modulationstransferfunktion, Spotgröße, etc.) sowie Überlagerungsgenauigkeit optimiert. Freiheitsgrade sind hierbei die Position der Laserquellen, die bei der Belichtung der Hologramme zur Erzeugung der beiden Gitter 10, 11 benutzt werden. Aufgrund der relativ geringen Brillenglasdicke sind die Unterschiede des Störungszustandes der Welle, welche durch die Totalreflexion an dem gekrümmten Brillenglas 3, 4 hervorgerufen werden, für die benachbarten Auskopplungen relativ gering und lassen sich daher recht gut optimieren.

Außerdem können noch zusätzliche Korrektionsoptiken (z.B. Linsen, Spiegel, computergenerierte Holgramme, etc.) in den Belichtungsaufbau der Hologramme gebracht werden, um eine zusätzliche Performanceverbesserung zu erzielen.

Um ein möglichst homogenen intensitätsmäßigen Feldverlauf zu erreichen, kann z.B. die Beugungseffizienz des Auskoppelgitters 11 mit ansteigender Auskopplung zunehmen. Dies kann durch einen geeigneten Verlauf der Profiltiefe des Auskoppelgitters 11 erzielt werden. Somit wird bei der ersten Auskopplung nur ein relativ geringer Teil der möglichen Beugungseffizienz verwendet und die Beugungseffizienz steigt von der ersten bis zur letzten Auskopplung an.

Ferner ist es möglich, einen Verlaufsfilter (z.B. variablen Graufilter) in der Nähe des Bildgebers 8 anzuordnen. Es ist auch möglich, eine angepaßte intensitätsmäßige ortsabhängige Abstrahlcharakteristik des Bildgebers vorzusehen.

Um ein möglichst gutes Ergebnis für Weißlicht zu erreichen, kann das Einkoppelgitter 10 und das Auskoppelgitter 11 jeweils als Superposition von z.B. drei entsprechenden Gittern ausgebildet sein, deren Mittenfrequenzen so ausgelegt sind, daß sich die Bündel für die entsprechenden mittleren Wellenlängen überlagern. Hierbei kann z.B. jeweils ein Gitterpaar auf rotes Licht, grünes Licht und blaues Licht abgestimmt sein.

Eine weitere Verbesserung der Effizienzeigenschaften kann dadurch erreicht werden, daß Ein- und Auskoppelgitter 10, 11 als reflektives Volumengitter ausgeführt werden.

Das Auskoppelgitter 11 ist so ausgelegt, daß der Benutzer das ausgekoppelte virtuelle Bild in Überlagerung mit der Umgebung wahrnehmen kann. Ferner sind Auskoppel- und Einkoppelgitter 10, 11 jeweils auf der Vorderseite 5 als reflektive Gitter ausgebildet.

Bei der erfindungsgemäßen Anzeigevorrichtung treffen die Lichtbündel L1-L3 in Abhängigkeit der Position des zugehörigen Pixels des Bildgebers somit maximal n mal auf das Auskoppelgittern, wobei n eine ganze Zahl größer oder gleich 3 ist. Bei der hier beschriebenen Ausführungsform ist n gleich 5. Des weiteren wird jedes Lichtbündel L1-L3 in Abhängigkeit der Position des zugehörigen Pixels bei 1 bis m aufeinanderfolgenden Auftreffen auf das Auskoppelgitter 11 ausgekoppelt, wobei m eine ganze Zahl größer oder gleich 1 und kleiner als n ist. Bei der hier beschriebenen Ausführungsform beträgt m für das erste Lichtbündel L1 2, für das zweite Lichtbündel L2 3 und für das dritte Lichtbündel L3 2. Die Auskopplung des jeweiligen Lichtbündels L1-L3 beginnt spätestens beim (n-m+1)-ten Auftreffen auf das Auskoppelgitter. Beim ersten Lichtbündel L1 beginnt die Auskopplung beim ersten Auftreffen, beim zweiten Lichtbündel L2 beginnt die Auskopplung beim zweiten Auftreffen und beim dritten Lichtbündel L3 beginnt die Auskopplung beim vierten Auftreffen auf das Auskoppelgitter 11.

Des weiteren liegt bei der beschriebenen Ausführungsform der Fall vor, daß für die gewünschte Auskopplung der entsprechenden Lichtbündel zwei bis drei Auskopplungen bzw. Beugungsauskopplungen benötigt werden. Es ist jedoch auch möglich, daß für zumindest eines der Lichtbündel L1-L3 nur eine Beugungsauskopplung benötigt wird.

Da das Einkoppelgitter 10 die Lichtbündel L1-L3 so stark beugen muß, daß die Lichtbündel dann durch eine innere Totalreflexion im Brillenglas 3 geführt sind, wird eine Gitterfrequenz von ca. 1700 - 2300 Linien/mm benötigt. Bei grünem Licht wird z.B. eine Gitterfrequenz von ca. 2000 Linien/mm, bei rotem Licht wird z.B. eine Gitterfrequenz von ca. 1700/mm und bei blauem Licht wird z.B. eine Gitterfrequenz von ca. 2300/mm benötigt. Gleiches gilt dann für das Auskoppelgitter 11, das die mittels Totalreflexion auf sich gerichteten Lichtbündel L1-L3 zum Auge des Benutzers hin auskoppeln muß. Daher ist es bevorzugt, das Einkoppel- und Auskoppelgitter 10, 11 durch holographische Belichtung mit Plan- und/oder Kugelwellen herzustellen. Die Lagepositionen der Belichtungswellenlängen sind dabei die entscheidenden Korrekturparameter für die Korrektur der Modulationstransferfunktion und der Deckungsgleichheit. Zur Verbesserung kann insbesondere noch mit deformierten Wellenfronten gearbeitet werden. Dabei können bei der Belichtung der Gitter spezielle Optiken oder auch computergenerierte Hologramme in den Belichtungsstrahlengang zur weiteren Verbesserung der Gesamtperformance eingebracht werden.

Die beschriebenen fünf Auskopplungen sind nur beispielhaft zu verstehen. Natürlich können auch weniger (jedoch zumindest drei) oder mehr Auskopplungen vorgesehen sein. Mit mehr Auskopplungen kann ein größeres Sichtfeld bereitgestellt werden.

Bei der bisher beschriebenen Ausführungsform wurde davon ausgegangen, daß die mehreren Auskopplungen nur in einer Richtung (y-Richtung) durchgeführt werden. Es ist natürlich auch möglich, in gleicher Weise mehrere Auskopplungen in einer zweiten Richtung (hier z.B. der x-Richtung) durchzuführen, um nicht nur das horizontale Sichtfeld (y-Richtung), sondern z.B. auch das vertikale Sichtfeld (x-Richtung) zu vergrößern.

Des weiteren wurde bisher die erfindungsgemäße Anzeigevorrichtung nur für ein Brillenglas (das linke Brillenglas 3) beschrieben. Die erfindungsgemäße Anzeigevorrichtung kann so ausgebildet sein, daß nur über ein Brillenglas (beispielsweise das linke Brillenglas) zusätzliche Informationen (Bild des Bildgebers 8) erzeugt und dem Benutzer in seinem Blickfeld eingespiegelt werden. Natürlich ist es auch möglich, beide Brillengläser so auszubilden, so daß dem Benutzer für beide Augen zusätzliche Informationen eingespiegelt werden können. In diesem Fall können die Informationen auch so eingespiegelt werden, daß für den Benutzer ein dreidimensionaler Bildeindruck der eingespiegelten Informationen entsteht.

Die Brillengläser 3, 4 können Brillengläser zur Korrektur einer Fehlsichtigkeit sein. Sie müssen aber nicht solche Brillengläser sein, sie können auch ohne optische Korrekturwirkung hinsichtlich eines Sehfehlers sein.

## Patentansprüche

1. Anzeigevorrichtung mit
einem Bildgeber (8) mit mehreren Pixeln, von denen Lichtbündel (L1, L2, L3) zur Erzeugung eines Bildes ausgehen,
einer Steuereinheit (7) zur Steuerung des Bildgebers (8) und
einer Abbildungsoptik (14), die ein Lichtführungselement (3, 4) mit einer Vorderseite (5, 5') und einer Rückseite (6, 6') umfaßt, das ein an der Vorder- oder Rückseite (6, 6'; 5, 5') ausgebildetes Einkoppelgitter (10) und ein an der Vorder- oder Rückseite (5, 5'; 6, 6') ausgebildetes Auskoppelgitter (11) aufweist,
wobei die Lichtbündel (L1-L3) mittels Beugung am Einkoppelgitter (10) in das Lichtführungselement (3, 4) eingekoppelt, im Lichtführungselement (3, 4) mittels innerer Totalreflexion bis zum Auskoppelgitter (11) geführt und mittels Beugung am Auskoppelgitter (11) so ausgekoppelt werden, daß ein Benutzer das erzeugte Bild wahrnehmen kann,
und wobei
die Vorderseite (5, 5') und/oder die Rückseite (6, 6') gekrümmt ausgebildet sind/ist, **dadurch gekennzeichnet, daß** die
Abbildungsoptik (14) so ausgelegt ist, daß die Lichtbündel (L1-L3) in Abhängigkeit der Position des zugehörigen Pixels maximal n mal auf das Auskoppelgitter (11) treffen, wobei n eine ganze Zahl größer oder gleich drei ist, und
daß die Lichtbündel (L1-L3) in Abhängigkeit der Position des zugehörigen Pixels bei genau 1 bis m aufeinander folgenden Auftreffen auf das Auskoppelgitter (11) ausgekoppelt werden, wobei m eine ganze Zahl größer oder gleich eins und kleiner als n ist und die Auskopplung spätestens beim (n-m+1)-ten Auftreffen beginnt.

2. Anzeigevorrichtung nach Anspruch 1, **dadurch gekennzeichnet, daß** das Einkoppel- und/oder Auskoppelgitter (10, 11) als abbildendes Gitter ausgebildet sind/ist.

3. Anzeigevorrichtung nach Anspruch 1 oder 2, **dadurch gekennzeichnet, daß** das Einkoppel- und/oder Auskoppelgitter (10, 11) als reflektives Gitter, insbesondere als reflektives Volumengitter, ausgebildet sind/ist.

4. Anzeigevorrichtung nach einem der obigen Ansprüche, **dadurch gekennzeichnet, daß** das Einkoppel- und/oder Auskoppelgitter (10, 11) auf der Vorderseite (5, 5') des Lichtführungselements (3, 4) ausgebildet sind/ist.

5. Anzeigevorrichtung nach einem der obigen Ansprüche, **dadurch gekennzeichnet, daß** das Auskoppelgitter (11) so ausgelegt ist, daß seine Beugungseffizienz für ein Lichtbündel (L1-L3) von der ersten bis zur m-ten Auskopplung hin ansteigt.

6. Anzeigevorrichtung nach einem der obigen Ansprüche, **dadurch gekennzeichnet, daß** zwischen dem Brillenglas (3, 4) und dem Bildgeber (8) ein Verlaufsfilter angeordnet ist, um eine homogene Intensität im für den Betrachter wahrnehmbaren Bild zu erreichen.

7. Anzeigevorrichtung nach einem der obigen Ansprüche, **dadurch gekennzeichnet, daß** der Bildgeber (8) eine ortsabhängige Variation der abgestrahlten Lichtintensität aufweist, um eine homogene Intensität im für den Benutzer wahrnehmbaren Bild zu erreichen.

8. Anzeigevorrichtung nach einem der obigen Ansprüche, **dadurch gekennzeichnet, daß** sich mehrere Auskopplungen eines Lichtbündels (L1-L3) einer Eyebox der Abbildungsoptik (14) teilweise überlappen.

9. Anzeigevorrichtung nach einem der obigen Ansprüche, **dadurch gekennzeichnet, daß** das Einkoppel- und Auskoppelgitter (10, 11) jeweils eine Überlagerung von mehreren Einzelgittern ist, die auf unterschiedliche Mittenfrequenzen ausgelegt sind, wobei die Mittenfrequenzen der Einzelgitter für das Ein- und Auskoppelgitter jeweils paarweise zusammenfallen.

10. Anzeigevorrichtung nach einem der obigen Ansprüche, **dadurch gekennzeichnet, daß** die Anzeigevorrichtung eine auf den Kopf des Benutzers aufsetzbare Haltevorrichtung (12) aufweist, an der der Bildgeber (8) und das Lichtführungselement (3, 4) befestigt sind.

11. Anzeigevorrichtung nach einem der obigen Ansprüche, **dadurch gekennzeichnet, daß** das Lichtführungselement (3, 4) und das Auskoppelgitter (11) so ausgebildet sind, daß der Benutzer das erzeugte Bild in Überlagerung mit der Umgebung wahrnehmen kann.

## Claims

1. Display device with
an image generator (8) with several pixels, from which light bundles (L1, L2, L3) are emitted for generating an image,
a control unit (7) for controlling the image generator (8) and
an imaging optical system (14) which comprises a light guiding element (3, 4) with a front side (5, 5') and a rear side (6, 6'), which light guiding element has an input grating (10) formed on the front or rear side (6, 6'; 5, 5') and an output grating (11) formed on the front or rear side (5, 5'; 6, 6'),
wherein the light bundles (L1-L3) are input into the light guiding element (3, 4) by means of diffraction at the input grating (10), guided in the light guiding element (3, 4) by means of total internal reflection up to the output grating (11) and output by means of diffraction at the output grating (11) such that a user can perceive the generated image,
and wherein
the front side (5, 5') and/or the rear side (6, 6') is/are formed curved,
**characterized in that**
the imaging optical system (14) is designed such that the light bundles (L1-L3) strike the output grating (11) at most n times depending on the position of the associated pixel, wherein n is an integer greater than or equal to three, and
**in that** the light bundles (L1-L3) are output depending on the position of the associated pixel at exactly 1 to m successive strikes on the output grating (11), wherein m is an integer greater than or equal to one and is smaller than n and the outputting begins, at the latest, at the (n-m+1)^{th} strike.

2. Display device according to claim 1, **characterized in that** the input and/or output grating(s) (10, 11) is/are formed as an imaging grating.

3. Display device according to claim 1 or 2, **characterized in that** the input and/or output grating(s) (10, 11) is/are formed as a reflective grating, in particular as a reflective volume grating.

4. Display device according to one of the above claims, **characterized in that** the input and/or output grating(s) (10, 11) is/are formed on the front side (5, 5') of the light guiding element (3, 4).

5. Display device according to one of the above claims, **characterized in that** the output grating (11) is designed such that its diffraction efficiency for a light bundle (L1-L3) increases from the first to the m^{th} output.

6. Display device according to one of the above claims, **characterized in that** a graduated filter is arranged between the spectacle lens (3, 4) and the image generator (8), in order to achieve a homogeneous intensity in the image that can be perceived by the observer.

7. Display device according to one of the above claims, **characterized in that** the image generator (8) has a location-dependent variation of the emitted light intensity, in order to achieve a homogeneous intensity in the image that can be perceived by the user.

8. Display device according to one of the above claims, **characterized in that** several outputs of a light bundle (L1-L3) of an eyebox of the imaging optical system (14) partially overlap each other.

9. Display device according to one of the above claims, **characterized in that** the input and output gratings (10, 11) are in each case a superimposition of several individual gratings which are designed for different centre frequencies, wherein the centre frequencies of the individual gratings for the input and output gratings in each case coincide in pairs.

10. Display device according to one of the above claims, **characterized in that** the display device has a holder (12) which can be fitted on the head of the user and to which the image generator (8) and the light guiding element (3, 4) are attached.

11. Display device according to one of the above claims, **characterized in that** the light guiding element (3, 4) and the output grating (11) are formed such that the user can perceive the generated image superimposed with the surroundings.

## Revendications

1. Dispositif d'affichage comprenant un imageur (8) doté de plusieurs pixels d'où partent des faisceaux lumineux (L1, L2, L3) pour générer une image,
une unité de commande (7) pour commander l'imageur (8) et
une optique d'imagerie (14) qui comporte un élément guide de lumière (3, 4) présentant une face avant (5, 5') et une face arrière (6, 6') qui comporte un réseau de couplage (10) formé sur la face avant ou arrière (5, 5' ; 6, 6') et un réseau de découplage (11) formé sur la face avant ou arrière (5, 5' ; 6, 6'),
dans lequel les faisceaux lumineux (L1-L3) sont injectés dans l'élément guide de lumière (3, 4) par diffraction sur le réseau de couplage (10), sont guidés dans l'élément guide de lumière (3, 4) par réflexion interne totale jusqu'au réseau de découplage (11) et sont découplés par diffraction sur le réseau de découplage (11) de manière à ce qu'un utilisateur puisse percevoir l'image générée,
et dans lequel la face avant (5, 5') et/ou la face arrière (6, 6') est/sont réalisée(s) de manière incurvée, **caractérisé en ce que** l'optique d'imagerie (14) est conçue de manière à ce que les faisceaux lumineux (L1-L3) soient incidents sur le réseau de découplage (11) au maximum n fois en fonction de la position du pixel associé, où n est un nombre entier supérieur ou égal à trois, et
à ce que les faisceaux lumineux (L1-L3) soient découplés en fonction de la position du pixel associé lors d'exactement 1 à m incidences successives sur le réseau de découplage (11), où m est un nombre entier supérieur ou égal à un et inférieur à n et le découplage commence au plus tard lors de la (n-m+1)-ème incidence.

2. Dispositif d'affichage selon la revendication 1, **caractérisé en ce que** le réseau de couplage et/ou de découplage (10, 11) est/sont réalisé(s) sous la forme d'un réseau imageur.

3. Dispositif d'affichage selon la revendication 1 ou 2, **caractérisé en ce que** le réseau de couplage et/ou de découplage (10, 11) est/sont réalisé(s) sous la forme d'un réseau réfléchissant, en particulier d'un réseau en volume réfléchissant.

4. Dispositif d'affichage selon l'une des revendications précédentes, **caractérisé en ce que** le réseau de couplage et/ou de découplage (10, 11) est/sont réalisé(s) sur la face avant (5, 5') de l'élément guide optique (3, 4).

5. Dispositif d'affichage selon l'une des revendications précédentes, **caractérisé en ce que** le réseau de découplage (11) est conçu de manière à ce que son efficacité de diffraction pour un faisceau lumineux (L1-L3) augmente du premier au m-ième découplage.

6. Dispositif d'affichage selon l'une des revendications précédentes, **caractérisé en ce qu'**un filtre gradué est disposé entre le verre de lunettes (3, 4) et l'imageur (8) afin d'obtenir une intensité homogène dans l'image perceptible par l'observateur.

7. Dispositif d'affichage selon l'une des revendications précédentes, **caractérisé en ce que** l'imageur (8) présente une variation de l'intensité lumineuse émise qui dépend de la position afin d'obtenir une intensité homogène dans l'image perceptible par l'utilisateur.

8. Dispositif d'affichage selon l'une des revendications précédentes, **caractérisé en ce que** plusieurs découplages d'un faisceau lumineux (L1-L3) d'une boîte oculaire de l'optique d'imagerie (14) se chevauchent partiellement.

9. Dispositif d'affichage selon l'une des revendications précédentes, **caractérisé en ce que** le réseau de couplage et de découplage (10, 11) est respectivement une superposition de plusieurs réseaux individuels qui sont conçus pour différentes fréquences centrales, dans lequel les fréquences centrales des réseaux individuels coïncident respectivement par paires pour les réseaux de couplage et de découplage.

10. Dispositif d'affichage selon l'une des revendications précédentes, **caractérisé en ce que** le dispositif d'affichage comporte un dispositif de support (12) qui peut être placé sur la tête de l'utilisateur et auquel sont fixés l'imageur (8) et l'élément guide optique (3, 4).

11. Dispositif d'affichage selon l'une des revendications précédentes, **caractérisé en ce que** l'élément guide optique (3, 4) et le réseau de découplage (11) sont conçus de manière à ce que l'utilisateur puisse percevoir l'image générée de manière superposée à l'environnement.
